# EUROPÄISCHE PATENTSCHRIFT

(11) **EP 3 892 077 B1**
(45) Veröffentlichungstag und Bekanntmachung des Hinweises auf die Patenterteilung: **05.06.2024**
(21) Anmeldenummer: 21153381.5
(22) Anmeldetag: 26.01.2021
(51) Int. Cl.: A01B 69/00, A01B 69/04, A01D 41/127

(54) **LENKSYSTEM FÜR EIN NUTZFAHRZEUG**
STEERING SYSTEM FOR A COMMERCIAL VEHICLE
SYSTÈME DE DIRECTION POUR UN VÉHICULE UTILITAIRE

(30) Priorität: 09.04.2020 DE 102020109936
(43) Veröffentlichungstag der Anmeldung: 13.10.2021
(73) Patentinhaber: CLAAS E-Systems GmbH, 49201 Dissen (DE)
(72) Erfinder: Burchardi, Henrik, 3230 Graested (DK); Jensen, Martin Falk, 2500 Valby (DK); Andersen, Gert Lysgaard, 3450 Alleroed (DK)
(74) Vertreter: CLAAS Gruppe

(56) Entgegenhaltungen:
- EP-A2- 1 266 554
- WO-A1-2014/105927
- CN-A- 109 588 107
- US-A- 4 211 921
- US-A- 6 101 795
- US-A1- 2019 128 690

## Beschreibung

Die vorliegende Erfindung betrifft ein Lenksystem für ein, insbesondere landwirtschaftliches oder kommunales, Nutzfahrzeug mit einem Arbeitsgerät, wobei das Lenksystem eine Steuereinheit zur Generierung von Lenksignalen zum autonomen Führen des Nutzfahrzeugs, eine Kameraanordnung zur Aufnahme von Bildern sowie eine mit der Steuereinheit verbundene Benutzerschnittstelle umfasst, wobei die Steuereinheit zur Auswertung der von der Kameraanordnung erzeugten Bilddaten eingerichtet ist, um in Abhängigkeit von den Bilddaten die Lenksignale zu generieren. Weiterhin betrifft die Erfindung ein Nutzfahrzeug gemäß dem Oberbegriff des Anspruches 14 sowie ein Verfahren zum Betreiben eines Lenksystems für ein Nutzfahrzeug gemäß dem Oberbegriff des Anspruches 15.

Aus der US 2005/0102079 A1 ist ein Lenksystem für ein landwirtschaftliches Nutzfahrzeug wie einen Traktor bekannt, mit welchem der Traktor automatisch auf einem Feld gelenkt wird. Der Traktor führt ein als Ballenpresse ausgeführtes Arbeitsgerät mit sich, welches der Aufnahme von Erntegut in Form eines Schwads zur Herstellung von Ballen dient. Mittels einer an dem Traktor angeordneten Kamera wird das in Fahrtrichtung liegende Erntegut in Form des aufzunehmenden Schwads vorausschauend erkannt. Mit ihrer nach vorne, in Fahrtrichtung, gerichteten Blickrichtung der Kamera wird der Schwadverlauf erkannt, der zumeist nicht geradlinig ist, sondern geringfügige seitliche Abweichungen aufweist. Durch die Auswertung der Bilddaten, die den Schwadverlauf wiedergeben, werden von einer Steuereinheit vom Schwadverlauf abhängige Lenksignale generiert, mit welchen der Traktor automatisch gelenkt wird, um dem Schwadverlauf zu folgen, wodurch eine nahezu vollständige Aufnahme des Erntegutes erreicht wird. Das aus der US 2005/0102079 A1 bekannte Lenksystem sowie die zugehörige Kameraanordnung orientieren sich ausschließlich in Fahrtrichtung des Nutzfahrzeugs.

Ein vergleichbares Lenksystem für einen Traktor ist aus der EP 2 135 498 A1 bekannt, wobei hier neben einer entlang der Längsachse des Traktors angeordneten Kamera, deren Blickrichtung geradeaus, d.h. in Fahrrichtung ausgerichtet ist, ein zusätzlicher Navigationssensor wie ein GPS-Sensor verwendet wird, um durch eine Steuereinheit Lenksignale zum Führen des Traktors zu generieren. Für eine höhere Präzision bei der Generierung der Lenksignale werden zusätzlich RTK-Signale herangezogen, für deren Nutzung jedoch Gebühren zu entrichten sind. Zudem stehen diese RTK-Signale nicht überall flächendeckend zur Verfügung und sind oftmals nur räumlich begrenzt verfügbar.

Für Nutzfahrzeug mit einem Arbeitsgerät, welche entlang eines neben dem Nutzfahrzeug seitlich verlaufenden zu bearbeitenden Bodenbereichs gesteuert werden müssen, sind diese Lenksystem nicht sinnvoll verwendbar, um eine Bedienperson vom gleichzeitigen Lenken sowie Überwachen des Verkehrs, der Umgebung, des Auftretens von Hindernissen und der Arbeitsweise des Arbeitsgerätes zu entlasten. So muss die Bedienperson eines Nutzfahrzeugs gemäß der EP 2 135 498 A1 dieses manuell lenken oder ist von dem Vorhandensein von RTK-GPS-Signalen abhängig. Weitere bekannte Lenksysteme sind in den Dokumenten EP 1 266 554 A2, US 4 211 921 A und US 2019/128690 A1 offenbart.

Der Erfindung liegt das Problem zugrunde, ein bekanntes Lenksystem für ein Nutzfahrzeug derart auszugestalten und weiterzubilden, dass eine vereinfachte und von externen Signalen zur Positionsbestimmung unabhängige Generierung von Lenksignalen zum autonomen Führen des Nutzfahrzeugs entlang eines seitlich verlaufenden zu bearbeitenden Bodenbereichs ermöglicht wird.

Diese Aufgabe wird erfindungsgemäß durch ein Lenksystem gemäß dem Oberbegriff des Anspruches 1 durch die Merkmale des kennzeichnenden Teils des Anspruches 1 gelöst. Des Weiteren wird diese Aufgabe durch ein Verfahren zum automatischen Lenken mit den Merkmalen des nebengeordneten Anspruches 14 gelöst.

Gemäß dem Anspruch 1 wird ein Nutzfahrzeug, insbesondere landwirtschaftliches oder kommunales, Nutzfahrzeug mit einem Arbeitsgerät und mit einem Lenksystem bereitgestellt, wobei das Lenksystem eine Steuereinheit zur Generierung von Lenksignalen zum autonomen Führen des Nutzfahrzeugs, eine Kameraanordnung zur Aufnahme von Bildern sowie eine mit der Steuereinheit verbundene Benutzerschnittstelle umfasst, wobei die Steuereinheit zur Auswertung der von der Kameraanordnung erzeugten Bilddaten eingerichtet ist, um in Abhängigkeit von den Bilddaten die Lenksignale zu generieren, wobei die Kameraanordnung derart an dem Nutzfahrzeug positioniert und mit ihrer Blickrichtung ausgerichtet ist, dass ein zu befahrender Bodenbereich und ein hierzu seitlich benachbarter zu bearbeitender Bodenbereich zugleich erfassbar sind, und dass die Steuereinheit dazu eingerichtet ist, anhand der erfassten Bilddaten eine Grenze zu bestimmen, entlang der das Lenksystem das Nutzfahrzeug und/oder das Arbeitsgerät in einem einzuhaltenden Abstand führt. Hierdurch wird eine Bedienperson des Nutzfahrzeugs davon entlastet, das Nutzfahrzeug selbst lenken zu müssen, um den einzuhaltenden Abstand einzuhalten, der notwendig ist, um die Bearbeitung des zu bearbeitenden Bodenbereich durchführen zu können. Ein manuelles Lenken des Nutzfahrzeugs, welches für die Bedienperson wegen der Aufteilung der Aufmerksamkeit auf den umgebenden Verkehr, das Lenken des Nutzfahrzeugs und die Überwachung des Betriebs des Arbeitsgerätes ermüdend und stressig ist, kann somit entfallen. Vielmehr kann sich die Bedienperson auf das Arbeiten mit dem Arbeitsgerät sowie die Umgebung konzentrieren. Vorzugsweise kann nur bei einem Auftreten eines Hindernisses entlang des zu befahrender Bodenbereichs oder des zu bearbeitenden Bodenbereichs ein aktives Eingreifen durch die Bedienperson erforderlich sein. Das Lenksystem hat zudem den Vorteil, dass es unabhängig von der Verfügbarkeit von RTK-Signalen einsatzfähig ist. Das Lenksystem kann insbesondere an dem Nutzfahrzeug nachrüstbar ausgeführt sein.

Es handelt sich bei dem zu befahrenden Bodenbereich um eine befahrbare Oberfläche, die im Wesentlichen keinen pflanzlichen Bewuchs aufweist, und bei dem zu bearbeitenden Bodenbereich um eine Fläche, die einen pflanzlichen Bewuchs aufweist, der mittels des Arbeitsgerätes bearbeitet werden soll. Bei dem zu bearbeitenden Bodenbereich kann es sich auch um eine zu reinigende oder zu räumende Fläche handeln, die Teil des zu befahrenden Bodenbereiches sein kann.

Die Steuereinheit umfasst eine Recheneinheit sowie einen Speicher. Die Benutzerschnittstelle umfasst eine Eingabeeinheit sowie eine Anzeigevorrichtung als Ausgabeeinheit. Die Eingabeeinheit kann Bestandteil der Anzeigevorrichtung sein, wenn diese beispielsweise als berührungssensitiver Bildschirm ausgeführt ist.

Insbesondere kann die Steuereinheit dazu eingerichtet sein, die Grenze automatisch zu bestimmen. So kann die Steuereinheit unter Verwendung eines im Speicher der Steuereinheit hinterlegten Regelwerkes automatisch zwischen dem befahrenen Bodenbereich und dem zu bearbeitenden Bodenbereich unterscheiden.

Weiterhin kann die Steuereinheit dazu eingerichtet sein, die Grenze mittels vorgebbarer Auswahlkriterien zu bestimmen, die durch die Benutzerschnittstelle eingebbar sind. Die Benutzerschnittstelle ermöglicht die Anzeige und Auswahl von Auswahlkriterien durch die Bedienperson. Auswahlkriterien für das Bestimmen der Grenze zwischen dem zu befahrenden Bodenbereich und dem zu bearbeitenden Bodenbereich können beispielsweise das Vorhandensein von Farbmarkierungen, eine unterschiedliche Beschaffenheit des zu befahrenden Bodenbereichs und des zu bearbeitenden Bodenbereichs, Unterschiede im Höhenprofil zwischen dem zu befahrenen Bodenbereich und dem zu bearbeitenden Bodenbereich oder sonstige zur Differenzierung des zu befahrenden Bodenbereichs und des zu bearbeitenden Bodenbereichs geeignete Charakteristika sein. Farbmarkierungen können beispielsweise am Rand einer Fahrbahn vorhandene Fahrbahnbegrenzungslinien sein. Eine unterschiedliche Beschaffenheit des zu befahrenden Bodenbereichs und des zu bearbeitenden Bodenbereichs kann aus unterschiedlichen Bodenbelägen resultieren, wie Asphalt als Bodenbelag des zu befahrenden Bodenbereichs und Schotter des zu bearbeitenden Bodenbereichs, auf welchem zusätzlich pflanzlicher Bewuchs vorhanden ist. Unterschiede im Höhenprofil zwischen dem zu befahrenen Bodenbereich und dem zu bearbeitenden Bodenbereich bilden beispielsweise vorhandene Bordsteinkanten aus.

Insbesondere kann die Benutzerschnittstelle zur manuellen Eingabe und Anpassung des zur Grenze einzuhaltenden Abstandes eingerichtet sein. Eine automatische Festlegung des zur Grenze einzuhaltenden Abstandes, die mittels des Regelwerkes bestimmt wird, kann durch die Bedienperson durch eine Eingabe eines geänderten Abstandswertes über die Benutzerschnittstelle übersteuert werden. Dies kann beispielsweise erforderlich sein, wenn es die tatsächlichen Gegebenheiten nach Auffassung der Bedienperson erfordern.

Bevorzugt kann die Kameraanordnung zumindest eine 2D-Kamera oder eine 3D-Kamera oder als eine zwischen einem 2D-Modus und einem 3D-Modus umschaltbare Kamera umfassen. Bei der 3D-Kamera handelt es sich insbesondere um eine Stereokamera, also eine Kamera mit insbesondere zwei Kameraobjektiven zur Aufnahme stereoskopischer Halbbilder. Spezielle Varianten der Stereokameras besitzen auch mehr Kameraobjektive, beispielsweise vier Kameraobjektive, und sind von der genannten Stereokamera mit umfasst. Ebenfalls umfasst sind Kameras mit nur einem Kameraobjektiv, die über einen optischen Aufsatz ebenfalls stereoskopische Bildpaare aus Halbbildern erzeugen können. Grundsätzlich ist es auch denkbar, zwei Einzelkameras vorzusehen, die jeweils Einzelbilder erzeugen, die zu stereoskopischen Bildpaaren zusammengeführt werden bzw. umgewandelt werden.

Hierbei kann die Kameraanordnung konfiguriert sein, mittels der Kamera Farbinformationen über die Bodenbereiche zu generieren. Mittels der 2D-Kamera können insbesondere monoskopische Einzelbilder, also Bilder ohne 3D-Informationen, aufgenommen und zu entsprechenden Farbinformationen weiterverarbeitet werden. Damit lassen sich Unterschiedliche Beschaffenheiten des zu befahrenden Bodenbereichs und des zu bearbeitenden Bodenbereichs bestimmen, die sich anhand unterschiedlicher Farben der Bodenbereiche auf gleicher Ebene unterscheiden lassen. Beispielsweise lässt sich somit zwischen Asphalt oder Schotter als Belag des zu befahrenden Bodenbereichs und Grün aufgrund des Bewuchses des zu bearbeitenden Bodenbereichs unterscheiden.

Insbesondere kann die Kameraanordnung konfiguriert sein, mittels der Kamera 3D-Informationen über die Bodenbereiche zu generieren. Anhand der Auswertung der 3D-Informationen lassen sich Höhenunterschiede zwischen zwei Bodenbereichen bestimmen. Beispielsweise ein vertikaler Versatz zwischen einer asphaltierten Fahrbahn als zu befahrendem Bodenbereich und der Oberfläche einer Bordsteinkante als Fahrbahnbegrenzung, an die sich mittelbar oder unmittelbar der zu bearbeitende Bodenbereich anschließen kann.

Bei einer zwischen einem 2D-Modus und einem 3D-Modus umschaltbaren Kamera Im 3D-Modus können 3D-Informationen und im 2D-Modus Farbinformationen generiert werden. Die Gesamtheit an Informationen, d. h. 3D-Informationen und die im 2D-Modus generierten Farbinformationen, kann dann anschließend insgesamt dazu herangezogen werden, das Vorhandensein und den Verlauf der Grenze möglichst exakt zu bestimmen.

Vorzugsweise kann die Steuereinheit zur Bestimmung der Grenze durch die Auswertung der Farbinformationen und/oder der 3D-Informationen eingerichtet sein.

Gemäß einer bevorzugten Ausführung kann die Kameraanordnung im Frontbereich des Nutzfahrzeugs oder seitlich am Nutzfahrzeug auf der dem zu bearbeitenden Bodenbereich zugewandten Seite angeordnet sein. Denkbar ist auch eine Anordnung der Kameraanordnung an einer geeigneten Stelle an dem Arbeitsgerät.

Dabei kann die Blickrichtung der Kameraanordnung auf die Bodenbereiche schräg vor und/oder seitlich neben dem Nutzfahrzeug ausgerichtet sein oder werden.

Bevorzugt kann die Kameraanordnung mittels einer Haltevorrichtung lösbar an dem Nutzfahrzeug befestigbar sein. Hierdurch wird zudem eine einfachere Nachrüstbarkeit an dem Nutzfahrzeug ermöglicht. Die Haltevorrichtung kann beispielsweise Klemmen zur Aufnahme der Kameraanordnung umfassen.

Gemäß einer bevorzugten Weiterbildung kann die Ausrichtung der Blickrichtung der Kameraanordnung durch eine Ansteuerung eines Aktors einstellbar sein, an welcher die Kameraanordnung oder die die die Kameraanordnung aufnehmende Haltevorrichtung angeordnet ist. Der Aktor kann vorzugsweise elektromechanisch arbeitend ausgeführt sein.

Weiterhin kann die Steuereinheit zur Ansteuerung des Arbeitsgerätes eingerichtet sein. Somit kann die Steuereinheit, neben der Auswertung der Bilddaten in Form der Farb- und/oder 3D-Informationen, zur Ansteuerung der Kameraanordnung und optional des Aktors, der Benutzerschnittstelle sowie des Arbeitsgerätes dienen.

Weiterhin wird die eingangs gestellte Aufgabe durch ein Nutzfahrzeug gemäß dem nebengeordneten Anspruch 14 gelöst.

Gemäß dem Anspruch 1 wird ein Nutzfahrzeug, insbesondere ein landwirtschaftliches oder kommunales Nutzfahrzeug, mit einem Arbeitsgerät zum Bearbeiten eines parallel zu einem zu befahrenden Bodenbereich verlaufenden zu bearbeitenden Bodenbereichs mit einem Lenksystem vorgeschlagen.

Des Weiteren wird die Aufgabe durch ein Verfahren gemäß den oberbegrifflichen Merkmalen des Anspruches 14 durch die Merkmale des kennzeichnenden Teils von Anspruch 14 gelöst.

Gemäß dem Anspruch 14 wird ein Verfahren zum automatischen Lenken eines, insbesondere landwirtschaftliches oder kommunales, Nutzfahrzeugs mit einem Arbeitsgerät vorgeschlagen, wobei das Nutzfahrzeug von einem Lenksystem mit einer Steuereinheit zur Generierung von Lenksignalen autonom geführt wird, wobei das Lenksystem eine Kameraanordnung zur Aufnahme von Umgebungsbildern sowie eine mit der Steuereinheit verbundene Benutzerschnittstelle umfasst, wobei die Steuereinheit von der Kameraanordnung erzeugte Bilddaten auswertet, um in Abhängigkeit von den Bilddaten die Lenksignale zu generieren, wobei die Kameraanordnung derart an dem Nutzfahrzeug positioniert und mit ihrer Blickrichtung ausgerichtet wird, dass ein zu befahrender Bodenbereich und ein hierzu seitlich benachbarter zu bearbeitender Bodenbereich zugleich erfasst werden, wobei durch die Steuereinheit anhand der erfassten Bilddaten eine Grenze bestimmt wird, wobei das Nutzfahrzeug und/oder das Arbeitsgerät entlang der Grenze in einem einzuhaltenden Abstand durch das Lenksystem geführt wird. Das Verfahren zeichnet sich dabei durch die Vorteile des Lenksystems gemäß den Ansprüchen 1 bis 13 aus.

Die vorliegende Erfindung wird nachstehend anhand eines in den Zeichnungen dargestellten Ausführungsbeispieles näher erläutert.

Es zeigen:
- Fig. 1: exemplarisch eine schematische Seitenansicht eines als Traktors ausgeführten Nutzfahrzeugs mit einer Kameraanordnung;
- Fig. 2: schematisch eine perspektivische Ansicht des Traktors mit daran angeordnetem Arbeitsgerät im Arbeitseinsatz;
- Fig. 3: schematisch eine perspektivische Teilansicht eines kommunalen Nutzfahrzeugs mit daran angeordnetem Arbeitsgerät im Arbeitseinsatz mit einer seitlichen Anordnung der Kameraanordnung;
- Fig. 4: eine schematische Darstellung des Ablaufs der Bestimmung und Einstellung einer Grenze anhand von 3D-Informationen; und
- Fig. 5: eine schematische Darstellung des Ablaufs der Bestimmung und Einstellung einer Grenze anhand von 2-D respektive Farbinformationen.

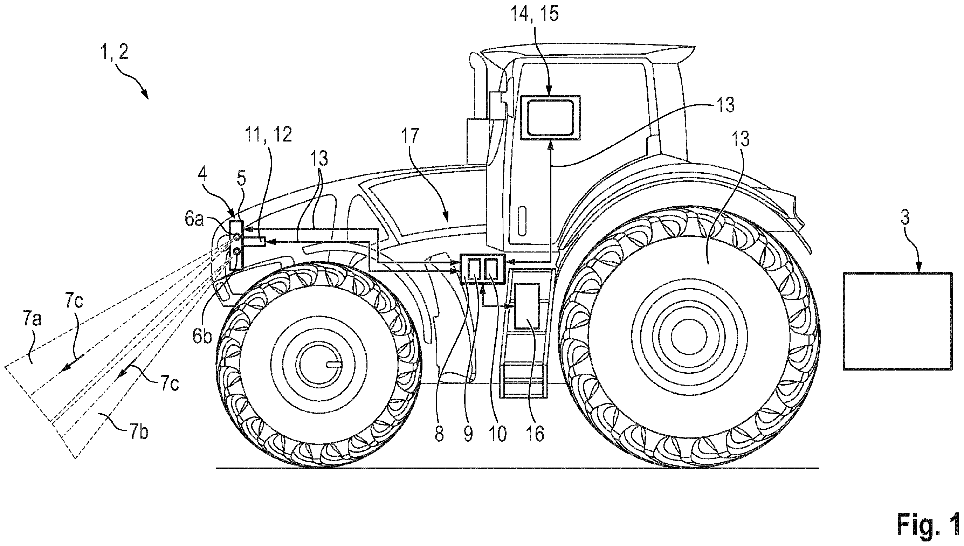

In Fig. 1 ist exemplarisch eine schematische Seitenansicht eines als Traktors 2 ausgeführten landwirtschaftlichen Nutzfahrzeugs 1 dargestellt. Lediglich schematisch ist ein an dem Traktor 2 angeordnetes Arbeitsgerät 3 angedeutet, welches von dem Traktor 2, insbesondere hydraulisch, betrieben wird. Im Frontbereich des Nutzfahrzeugs 1, insbesondere seitlich am Nutzfahrzeug 1 ist eine Kameraanordnung 4 mittels einer Haltevorrichtung 11, insbesondere nachträglich nachrüstbar, angeordnet. Die Haltevorrichtung 11 kann - nicht dargestellte - Klemmen zur Aufnahme der Kameraanordnung 4 sowie einen elektromechanisch arbeitenden Aktor 12 umfassen, die der Ausrichtung der Blickrichtung der Kameraanordnung 4 dient.

Die Kameraanordnung 4 kann eine 2D-Kamera oder eine 3D-Kamera oder als eine zwischen einem 2D-Modus und einem 3D-Modus umschaltbare Kamera 5 umfassen. Im dargestellten Ausführungsbeispiel ist die Kamera 5 als 3D-Kamera ausgeführt, die hier eine Stereokamera mit zwei Kameraobjektiven 6a und 6b ist. Über die beiden Kameraobjektive 6a, 6b ist die Aufnahme stereoskopischer Bildpaare entlang zweier verschiedener Blickachsen in Blickrichtung 7c möglich ist. Die beiden Blickachsen gehen dabei jeweils von dem optischen Zentrum des jeweiligen Kameraobjektivs 6a bzw. 6b aus und erstrecken sich jeweils in eine Blickrichtung 7c. Jedes Kameraobjektiv 6a, 6b weist einen - lediglich beispielhaft angedeuteten - Erfassungsbereich 7a bzw. 7b auf, durch welche Bodenbereiche seitlich neben und/oder vor dem Nutzfahrzeug 1 erkannt werden.

Das landwirtschaftliche Nutzfahrzeug 1 weist eine Steuereinheit 8 auf, die eine Recheneinheit 9 und einen Speicher 10 umfasst. Die Steuereinheit 8 ist durch Signalleitungen 13, beispielsweise eines Can-Bussystems, mit der Kameraanordnung 4 und dem Aktor 12 verbunden. Des Weiteren ist die Steuereinheit 8 durch Signalleitungen 13 mit einer Benutzerschnittstelle 14, die in der Kabine des Nutzfahrzeugs 1 angeordnet und vorzugsweise als berührungssensitiver Bildschirm 15 ausgeführt ist, verbunden. Weiterhin kann die Steuereinheit 8 signaltechnisch mit einer Hydraulikventilanordnung 16 zur Ansteuerung von - nicht dargestellten - Lenkzylindern verbunden sein. Denkbar ist auch, dass die Steuereinheit 8 mit einer separaten, der Ansteuerung der Hydraulikventilanordnung 16 dienenden Steuerung signaltechnisch verbunden ist, um Lenksignale zu übertragen. Im Speicher der Steuereinheit 8 ist ein Bildverarbeitungsprogramm hinterlegt, welches von der Recheneinheit 9 ausführbar ist, um die empfangenen Bilddaten auszuwerten.

Zum Führen und Lenken des Nutzfahrzeugs 1 weist dieses ein Lenksystem 17 auf. Das Lenksystem 17 umfasst die Steuereinheit 8 zur Generierung von Lenksignalen zum autonomen Führen des Nutzfahrzeugs 1. Weiterhin umfasst das Lenksystem 17 die Kameraanordnung 4 zur Aufnahme von Bildern sowie die Benutzerschnittstelle 14 zur Steuereinheit 8. Die Steuereinheit 8 ist zur Auswertung der von der Kameraanordnung 4 erzeugten Bilddaten eingerichtet, um in Abhängigkeit von den Bilddaten die Lenksignale zu generieren, um das Nutzfahrzeug 1 autonom zu führen.

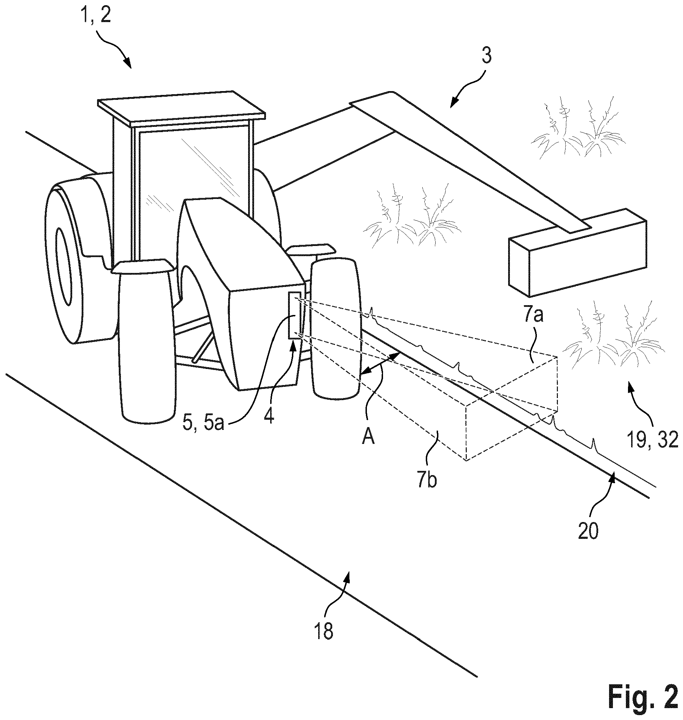

Fig. 2 zeigt schematisch eine perspektivische Ansicht des Traktors 2 mit dem daran angeordneten Arbeitsgerät 3 im Arbeitseinsatz. Das Arbeitsgerät 3 ist beispielhaft als an einem hydraulisch steuerbaren Ausleger angeordnetes Mähwerk ausgeführt. Durch die Kameraanordnung 4 werden zwei Bodenbereiche erfasst, ein zu befahrenden Bodenbereich 18 und ein hierzu seitlich benachbart verlaufender zu bearbeitender Bodenbereich 19. Bei dem zu befahrenden Bodenbereich 18 handelt es sich um eine befahrbare Oberfläche, die im Wesentlichen keinen pflanzlichen Bewuchs aufweist, und bei dem zu bearbeitenden Bodenbereich 19 um eine Fläche, die einen pflanzlichen Bewuchs aufweist, der mittels des Arbeitsgerätes 3 bearbeitet werden soll.

Die Kameraanordnung 4 im dargestellten Ausführungsbeispiel weist eine 2D-Kamera 5a oder eine zwischen einem 2D-Modus und einem 3D-Modus umschaltbare Kamera 5 auf. Im Erfassungsbereich 7a befindet sich der zu bearbeitende Bodenbereich 19. Im Erfassungsbereich 7b befindet der zu befahrende Bodenbereich 18. Der zu befahrende Bodenbereich 18 ist befestigt ausgeführt, beispielsweise als asphaltierte Straße 22 oder verdichteter Schotterweg 33. Der zu bearbeitende Bodenbereich 19 ist beispielsweise ein zu mähender Grünstreifen. Die anhand der Farbinformationen bestimmbare, parallel zum befahrbaren Bodenbereich 18 verlaufende Bewuchsgrenze bildet eine Grenze 20, entlang der das Lenksystem 17 das landwirtschaftliche Nutzfahrzeug 1 in einem einzuhaltenden Abstand A führt.

Die Kameraanordnung 4 ist konfiguriert, mittels der Kamera 5a bzw. der im 2D-Modus betriebenen Kamera 5 Farbinformationen über die Bodenbereiche 18, 19 zu generieren. Durch die Auswertung der Bilddaten der Kameraanordnung 4 durch die Steuereinheit 8 lässt sich zwischen dem zu befahrende Bodenbereich 18 und dem zu bearbeitenden Bodenbereich 19 unterscheiden, indem hierzu die Farbinformationen herangezogen werden, durch welche sich die Bodenbereiche 18 und 19 voneinander unterscheiden.

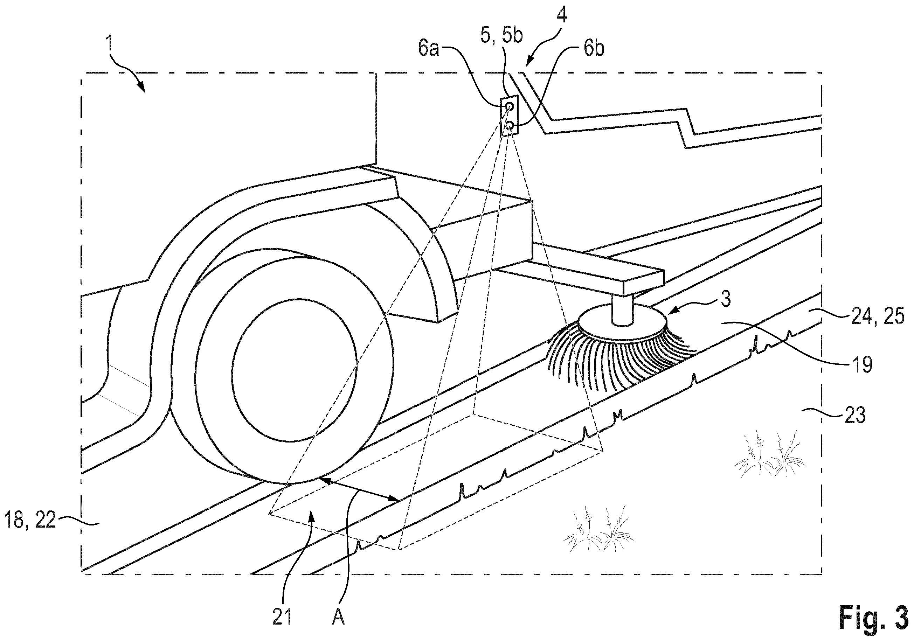

In Fig. 3 ist schematisch eine perspektivische Teilansicht des kommunalen Nutzfahrzeugs 1 mit daran angeordnetem Arbeitsgerät 3 im Arbeitseinsatz mit einer seitlichen Anordnung der Kameraanordnung 4 dargestellt. Das kommunale Nutzfahrzeug 1 ist beispielhaft als eine Kehrmaschine ausgeführt, welche als Arbeitsgerät 3 eine Kehr- und Aufnahmevorrichtung aufweist. Die Kameraanordnung 4 im dargestellten Ausführungsbeispiel weist eine 3D-Kamera 5b oder eine zwischen einem 2D-Modus und einem 3D-Modus umschaltbare Kamera 5 auf.

Die Kameraanordnung 4 ist konfiguriert, mittels der Kamera 5, 5b 3D-Informationen über die Bodenbereiche 18, 19 zu generieren. Im Erfassungsbereich 21 der Kamera 5 bzw. der 3D-kamera 5b befindet der zu befahrende Bodenbereich 18. Der zu befahrende Bodenbereich 18 ist befestigt ausgeführt, hier als asphaltierte Straße 22, die gegenüber einem Grünstreifen 23 durch eine Bordsteinkante 24 abgegrenzt ist. Der zu bearbeitenden Bodenbereich 19 im Fall des als Kehrmaschine ausgeführten Nutzfahrzeugs 1, liegt zwischen dem zu befahrenden Bodenbereich 18 und der Bordsteinkante 24. Der zu befahrende Bodenbereich 18, d.h. die Straße 22, liegt auf einer tieferen Ebene als die Oberfläche der Bordsteinkante 24 bzw. des daran angrenzenden parallel verlaufenden Grünstreifens 23. Die Auswertung der 3D-Informationen durch die Steuereinheit 8 ermöglicht es, die Bordsteinkante 23 als eine Grenze 25 zu bestimmen, entlang der das Lenksystem 17 das kommunale Nutzfahrzeug 20 in einem einzuhaltenden Abstand A führt.

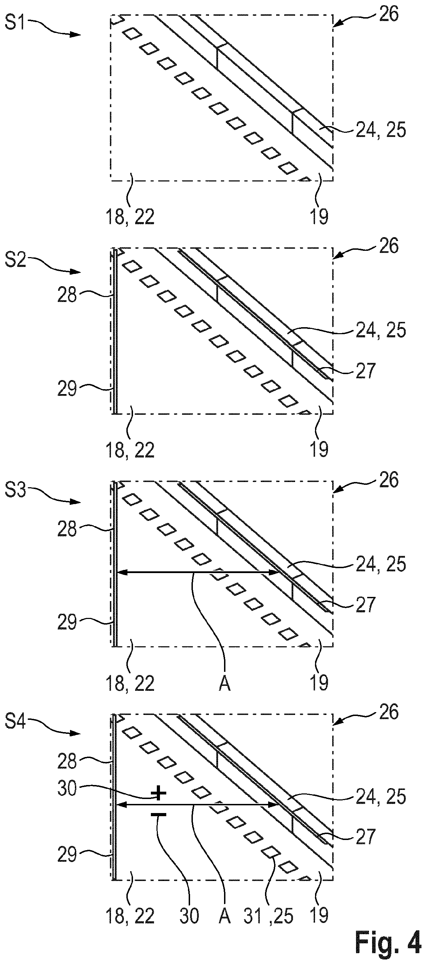

In Fig. 4 ist eine schematische Darstellung des Ablaufs der Bestimmung und Einstellung der Grenze 20, 25 anhand von 3D-Informationen dargestellt. Auf der linken Seite ist eine erste Bildabfolge dargestellt, welche anhand der 3D-Informationen generiert und auf der Anzeigevorrichtung 15 der Benutzerschnittstelle 14 dargestellt wird.

Im Schritt S1 wird ein aus den eingehenden Bilddaten der Kamera 5, 5b generiertes Bild 26 auf der Anzeigevorrichtung 15 der Benutzerschnittstelle 14 angezeigt. Das Bild 26 zeigt einen Ausschnitt des als Straße 22 ausgeführten befahrbaren Bereiches 18 und den zu bearbeitenden, hier zu reinigenden, Bereich 19 sowie die parallel hierzu verlaufende Bordsteinkante 24, die als Grenze 25 verwendet wird.

Im Schritt S2 wird das Bild 26 aktualisiert, indem eine die Grenze 25 darstellende Grenzlinie 27 und eine Hilfslinie 28 am der Grenzlinie 27 gegenüberliegenden Bildrand 29 eingeblendet werden. Die Hilfslinie 28 dient der Visualisierung der Position des Nutzfahrzeugs 1 bezogen auf die Grenzlinie 27. Die Grenze 25 wurde, wie bereits weiter oben ausgeführt, anhand der Auswertung der 3D-Informationen bestimmt. Vorliegend durch die Auswertung von Höhenunterschieden zwischen der Straße 22 und der Oberseite der Bordsteinkante 24.

Im Schritt S3 wird das Bild 26 erneut aktualisiert, indem zwischen der die Grenze 25 darstellenden Grenzlinie 27 und der Hilfslinie 28 ein Abstand A automatisch bestimmt und, beispielsweise durch einen Doppelpfeil, visualisiert wird. Die automatische Bestimmung des Abstands A basiert auf einem Regelwerk, das in dem Speicher 10 der Steuereinheit 8 hinterlegt ist. Das Regelwerk kann dabei Informationen über den Typ des Nutzfahrzeugs 1, beispielsweise die Ausführung des Nutzfahrzeugs 1 als landwirtschaftliches Nutzfahrzeug wie den Traktor 2 oder als kommunales Nutzfahrzeug wie die Kehrmaschine, sowie die Abmessungen des Nutzfahrzeugs 1 enthalten. Weiterhin kann das in dem Speicher 10 hinterlegbare Regelwerk Informationen über das Arbeitsgerät 3 umfassen. Zu den Informationen über das Arbeitsgerät 3 zählen die Art des Arbeitsgerätes 3, die Position der Anordnung des Arbeitsgerätes 3 an dem Nutzfahrtzeug 1 sowie dessen Arbeitsbreite und Arbeitsradius.

Im Schritt S4 kann die Anpassung des Abstands A durch eine manuelle Einstellung durch die Bedienperson erfolgen. Hierzu ist die Benutzerschnittstelle 14 zur Eingabe von Steuerbefehlen eingerichtet, die eine Verringerung oder Vergrößerung des automatisch bestimmen Abstands A bewirken. Im Fall des berührungssensitiven Bildschirms 15 als Ein- und Ausgabeeinheit kann die Veränderung des Abstands A durch das Betätigen virtueller Bedienelemente 30, dargestellt als Pluszeichen und als Minuszeichen, erfolgen.

Der eingestellte bzw. von der Bedienperson angepasste Abstand A und die automatisch bestimmte Grenze 25 werden von dem Lenksystem 17 verwendet, um das Nutzfahrzeug 1 und/oder das Arbeitsgerät 3 in dem einzuhaltenden Abstand A mittels entsprechender Lenksignale zu führen. Durch die fortlaufende Erfassung des zu befahrenden Bodenbereichs 18, des zu bearbeitenden Bodenbereiches 19 und der Grenze 25 kann das Lenksystem 17 Änderungen im Verlauf des zu befahrenden Bodenbereichs 18 oder des zu bearbeitenden Bodenbereiches 19 autonom folgen.

Alternativ oder zusätzlich könnte mittels zwischen 2D-Modus und 3D-modus umschaltbaren Kamera 5 der Kameraanordnung 4 das Erfassen der Farbinformationen zur Bestimmung des Verlaufs der Grenze 25 verwendet werden. Im dargestellten Ausführungsbeispiel gemäß Fig. 4 könnte auch eine farbige Fahrbahnmarkierung 31 als Grenze 25 bestimmt werden, um das Nutzfahrzeug 1 und/oder das Arbeitsgerät 3 in dem einzuhaltenden Abstand A mittels entsprechender Lenksignale zu führen. Bevorzugt sollte die Fahrbahnmarkierung 31 hierfür so beschaffen sein, dass ein kontinuierlicher Verlauf erkennbar ist.

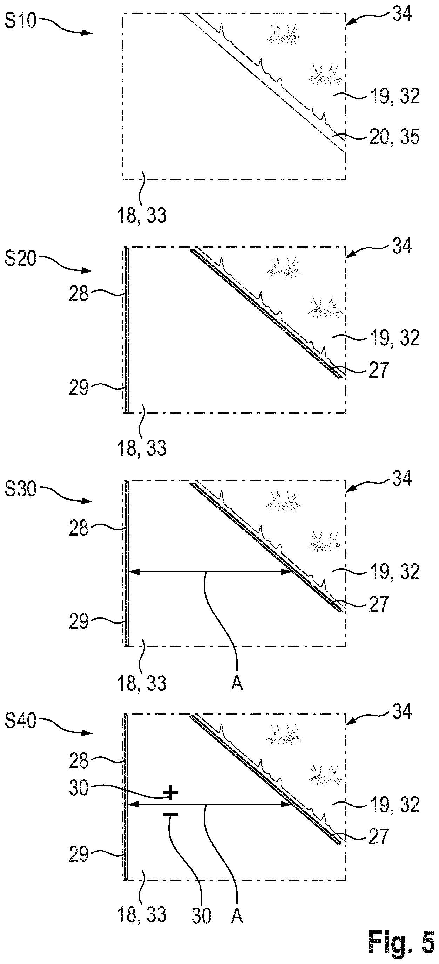

Fig. 5 zeigt eine schematische Darstellung des Ablaufs der Bestimmung und Einstellung der Grenze 20 anhand von 2-D respektive Farbinformationen, die von der Kameraanordnung 4 bereitgestellt werden. Der Aufbau der Darstellung in Fig. 5 entspricht im Wesentlichen dem in Fig. 4 dargestellten Ablauf.

Im Schritt S10 wird ein aus den eingehenden Bilddaten der Kamera 5, 5a generiertes Bild 34 auf der Anzeigevorrichtung 15 der Benutzerschnittstelle 14 angezeigt. Das Bild 34 zeigt einen Ausschnitt des als Schotterweg 33 ausgeführten befahrbaren Bodenbereiches 18 sowie des zu bearbeitenden, hier zu mähenden, Bodenbereiches 19. Im Unterschied zum 3D-Modus wird im 2D-Modus die Grenze 20 anhand der Auswertung der von der Kameraanordnung 4 bereitgestellten Farbinformationen durch die Steuereinheit 8 bestimmt. Der zu befahrende Bodenbereich 18 ist befestigt ausgeführt, hier als verdichteter Schotterweg 33. Der zu bearbeitende Bodenbereich 19 ist hier ein zu mähender Vegetationsbereich 32, der im Wesentlichen parallel verläuft. Die anhand der Farbinformationen bestimmbare, parallel zum befahrbaren Bodenbereich 18 verlaufende Bewuchsgrenze 35 bildet die Grenze 20, entlang der das Lenksystem 17 das landwirtschaftliche Nutzfahrzeug 1 in einem einzuhaltenden Abstand A führt.

Im Schritt S20 wird das Bild 34 aktualisiert, indem eine die Grenze 20 darstellende Grenzlinie 27 und eine Hilfslinie 28 am der Grenzlinie 27 gegenüberliegenden Bildrand 29 eingeblendet werden. Die Hilfslinie 28 dient der Visualisierung der Position des Nutzfahrzeugs 1 bezogen auf die Grenzlinie 27. Die Grenze 20 wurde, wie bereits weiter oben ausgeführt, anhand der Auswertung der 2D-lnformationen bestimmt. Vorliegend durch die Auswertung von Farbunterschieden zwischen dem Schotterweg 33 und dem Vegetationsbereich 32.

Im Schritt S30 wird das Bild 34 erneut aktualisiert, indem zwischen der die Grenze 20 darstellenden Grenzlinie 27 und der Hilfslinie 28 ein Abstand A automatisch bestimmt und, beispielsweise durch einen Doppelpfeil, visualisiert wird. Die automatische Bestimmung des Abstands A basiert auf dem bereits weiter oben genannten Regelwerk, das in dem Speicher 10 der Steuereinheit 8 hinterlegt ist.

Im Schritt S40 kann die Anpassung des Abstands A durch eine manuelle Einstellung durch die Bedienperson erfolgen. Dies kann, wie weiter oben bereits ausgeführt wurde, durch die Betätigung virtueller Bedienelemente 30 geschehen.

Neben der automatischen Bestimmung der Grenze 20 bzw. 25 anhand der Bilddatenauswertung kann die Steuereinheit 8 dazu eingerichtet sein, die Grenze 20, 25 mittels vorgebbarer Auswahlkriterien zu bestimmen, die durch die Benutzerschnittstelle 14 eingebbar sind. Insbesondere kann die Art der Grenze 20, 25 aus einer Auswahl möglicher Parameter von der Bedienperson ausgewählt werden.

Auswahlkriterien für das Bestimmen der Grenze 20, 25 zwischen dem zu befahrenden Bodenbereich 18 und dem zu bearbeitenden Bodenbereich 19 können beispielsweise das Vorhandensein von Farbmarkierungen, eine unterschiedliche Beschaffenheit des zu befahrenden Bodenbereichs 18 und des zu bearbeitenden Bodenbereichs 19, Unterschiede im Höhenprofil zwischen dem zu befahrenen Bodenbereich 18 und dem zu bearbeitenden Bodenbereich 19 sein.

### Bezugszeichenliste

| | | | |
|---|---|---|---|
| 1 | Nutzfahrzeug | 31 | Fahrbahnmarkierung |
| 2 | Traktor | 32 | Vegetationsbereich |
| 3 | Arbeitsgerät | 33 | Schotterweg |
| 4 | Kameraanordnung | 34 | Bild |
| 5 | Kamera | 35 | Bewuchsgrenze |
| 5a | 2D-Kamera | | |
| 5b | 3D-Kamera | A | Abstand |
| 6a,6b | Kameraobjektiv | S1 | Schritt |
| 7a,7b | Erfassungsbereich | S2 | Schritt |
| 7c | Blickrichtung | S3 | Schritt |
| 8 | Steuereinheit | S4 | Schritt |
| 9 | Recheneinheit | S10 | Schritt |
| 10 | Speicher | S20 | Schritt |
| 11 | Haltevorrichtung | S30 | Schritt |
| 12 | Aktor | S40 | Schritt |
| 13 | Signalleitungen | | |
| 14 | Benutzerschnittstelle | | |
| 15 | Bildschirm | | |
| 16 | Hydraulikventilanordnung | | |
| 17 | Lenksystem | | |
| 18 | Bodenbereich | | |
| 19 | Bodenbereich | | |
| 20 | Grenze | | |
| 21 | Erfassungsbereich | | |
| 22 | Straße | | |
| 23 | Grünstreifen | | |
| 24 | Bordsteinkante | | |
| 25 | Grenze | | |
| 26 | Bild | | |
| 27 | Grenzlinie | | |
| 28 | Hilfslinie | | |
| 29 | Bildrand | | |
| 30 | Bedienelement | | |

## Patentansprüche

1. Nutzfahrzeug (1, 2), insbesondere landwirtschaftliches oder kommunales Nutzfahrzeug (1, 2), mit einem Arbeitsgerät (3) eingerichtet zum ausschließlichen Bearbeiten eines parallel zu einem von dem Nutzfahrzeug (1, 2) zu befahrenden Bodenbereich (18) verlaufenden zu bearbeitenden Bodenbereichs (19), wobei der zu befahrende Bodenbereich (18) eine befahrbare Oberfläche ist, die im Wesentlichen keinen pflanzlichen Bewuchs aufweist, und der zu bearbeitenden Bodenbereich (19) eine Fläche ist, die einen pflanzlichen Bewuchs aufweist, der mittels des Arbeitsgerätes (3) bearbeitet werden soll, wobei das Nutzfahrzeug (1, 2) ein Lenksystem (17) aufweist, wobei das Lenksystem (17) eine Steuereinheit (8) zur Generierung von Lenksignalen zum autonomen Führen des Nutzfahrzeugs (1, 2), eine Kameraanordnung (4) zur Aufnahme von Bildern sowie eine mit der Steuereinheit (8) verbundene Benutzerschnittstelle (14) umfasst, wobei die Steuereinheit (8) zur Auswertung der von der Kameraanordnung (4) erzeugten Bilddaten eingerichtet ist, um in Abhängigkeit von den Bilddaten die Lenksignale zu generieren, wobei die zumindest eine Kameraanordnung (4) derart an dem Nutzfahrzeug (1, 2) positioniert und mit ihrer Blickrichtung (7c) ausgerichtet ist, dass der zu befahrende Bodenbereich (18) und der hierzu seitlich benachbarte zu bearbeitende Bodenbereich (19) zugleich erfassbar sind, und dass die Steuereinheit (8) dazu eingerichtet ist, anhand der erfassten Bilddaten eine Grenze (20, 25) zu bestimmen, entlang der das Lenksystem (17) das Nutzfahrzeug (1, 2) und/oder das Arbeitsgerät (3) in einem einzuhaltenden Abstand (A) führt.

2. Nutzfahrzeug (1, 2) nach Anspruch 1, **dadurch gekennzeichnet, dass** die Steuereinheit (8) dazu eingerichtet ist, die Grenze (20, 25) automatisch zu bestimmen.

3. Nutzfahrzeug (1, 2) nach Anspruch 1 oder 2, **dadurch gekennzeichnet, dass** die Steuereinheit (8) dazu eingerichtet ist, die Grenze (20, 25) mittels vorgebbarer Auswahlkriterien zu bestimmen, die durch die Benutzerschnittstelle (14) eingebbar sind.

4. Nutzfahrzeug (1, 2) nach einem der Ansprüche 1 bis 3, **dadurch gekennzeichnet, dass** die Benutzerschnittstelle (14) zur manuellen Eingabe und Anpassung des zur Grenze (20, 25) einzuhaltenden Abstandes (A) eingerichtet ist.

5. Nutzfahrzeug (1, 2) nach einem der Ansprüche 1 bis 4, **dadurch gekennzeichnet, dass** die Kameraanordnung (4) zumindest eine 2D-Kamera (5a) oder eine 3D-Kamera (5b) oder als eine zwischen einem 2D-Modus und einem 3D-Modus umschaltbare Kamera (5) umfasst.

6. Nutzfahrzeug (1, 2) nach Anspruch 5, **dadurch gekennzeichnet, dass** die Kameraanordnung (4) konfiguriert ist, mittels der Kamera (5a, 5) Farbinformationen über die Bodenbereiche (18, 19) zu generieren.

7. Nutzfahrzeug (1, 2) nach Anspruch 5, **dadurch gekennzeichnet, dass** die Kameraanordnung (4) konfiguriert ist, mittels der Kamera (5b, 5) 3D-Informationen über die Bodenbereiche (18, 19) zu generieren.

8. Nutzfahrzeug (1, 2) nach einem der vorangehenden Ansprüche, **dadurch gekennzeichnet, dass** die Steuereinheit (8) zur Bestimmung der Grenze (20, 25) durch die Auswertung der Farbinformationen und/oder der 3D-Informationen eingerichtet ist.

9. Nutzfahrzeug (1, 2) nach einem der vorangehenden Ansprüche, **dadurch gekennzeichnet, dass** die Kameraanordnung (4) im Frontbereich des Nutzfahrzeugs (1, 2) oder seitlich am Nutzfahrzeug (1, 2) auf der dem zu bearbeitenden Bodenbereich (19) zugewandten Seite angeordnet ist.

10. Nutzfahrzeug (1, 2) nach einem der vorangehenden Ansprüche, **dadurch gekennzeichnet, dass** die Blickrichtung (7c) der Kameraanordnung (4) auf die Bodenbereiche (18, 19) schräg vor und/oder seitlich neben dem Nutzfahrzeug (1, 2) ausgerichtet ist oder wird.

11. Nutzfahrzeug (1, 2) nach einem der vorangehenden Ansprüche, **dadurch gekennzeichnet, dass** die Kameraanordnung (4) mittels einer Haltevorrichtung (11) lösbar an dem Nutzfahrzeug (1, 2) befestigbar ist.

12. Nutzfahrzeug (1, 2) nach Anspruch 11, **dadurch gekennzeichnet**, die Ausrichtung der Blickrichtung (7c) der Kameraanordnung (4) durch eine Ansteuerung eines Aktors (12) einstellbar sein, an welcher die Kameraanordnung (4) oder eine die Kameraanordnung (4) aufnehmende Haltevorrichtung (11) angeordnet ist.

13. Nutzfahrzeug (1, 2) nach einem der vorangehenden Ansprüche, **dadurch gekennzeichnet, dass** die Steuereinheit (8) zur Ansteuerung des Arbeitsgerätes (3) eingerichtet ist.

14. Verfahren zum automatischen Lenken eines, insbesondere landwirtschaftliches oder kommunales, Nutzfahrzeugs (1, 2) nach einem der vorangehenden Ansprüche mit einem Arbeitsgerät, wobei das Nutzfahrzeug (1, 2) von einem Lenksystem (17) mit einer Steuereinheit (8) zur Generierung von Lenksignalen autonom geführt wird, wobei das Lenksystem (17) eine Kameraanordnung (4) zur Aufnahme von Bildern sowie eine mit der Steuereinheit (8) verbundene Benutzerschnittstelle (14) umfasst, wobei die Steuereinheit (8) von der Kameraanordnung (4) erzeugte Bilddaten auswertet, um in Abhängigkeit von den Bilddaten die Lenksignale zu generieren, wobei die Kameraanordnung (4) derart an dem Nutzfahrzeug (1, 2) positioniert und mit ihrer Blickrichtung (7c) ausgerichtet wird, dass ein zu befahrender Bodenbereich (18) und ein hierzu seitlich benachbarter zu bearbeitender Bodenbereich (19) zugleich erfasst werden, wobei durch die Steuereinheit (8) anhand der erfassten Bilddaten eine Grenze (20, 25) bestimmt wird, wobei das Nutzfahrzeug (1, 2) und/oder das Arbeitsgerät entlang der Grenze (20, 25) in einem einzuhaltenden Abstand (A) durch das Lenksystem (17) geführt wird.

## Claims

1. Utility vehicle (1, 2), in particular an agricultural or municipal utility vehicle (1, 2), with an implement (3) configured for exclusively working a ground area (19) which runs parallel to a ground area (18) to be travelled over by the utility vehicle (1, 2), wherein the ground area (18) to be travelled over is a drivable surface which has essentially no vegetation, and the ground area (19) to be cultivated is a surface which has vegetation which is to be cultivated by means of the implement (3), wherein the utility vehicle (1, 2) has a steering system (17), wherein the steering system (17) comprises a control unit (8) for generating steering signals for autonomous guidance of the utility vehicle (1, 2), a camera arrangement (4) for recording images and a user interface (14) connected to the control unit (8), wherein the control unit (8) is configured for evaluating the image data generated by the camera arrangement (4) in order to generate the steering signals as a function of the image data, wherein the at least one camera arrangement (4) is positioned on the utility vehicle (1, 2) in such a way and is orientated with its gaze (7c) in such a way that the ground area (18) to be travelled over and the ground area (19) to be worked on laterally adjacent thereto can be detected simultaneously, and in that the control unit (8) is configured to determine a boundary (20, 25) on the basis of the detected image data, along which the steering system (17) guides the utility vehicle (1, 2) and/or the implement (3) at a distance (A) to be maintained.

2. Utility vehicle (1, 2) according to claim 1, **characterised in that** the control unit (8) is configured to determine the boundary (20, 25) automatically.

3. Utility vehicle (1, 2) according to claim 1 or 2, **characterised in that** the control unit (8) is configured to determine the boundary (20, 25) by means of predeterminable selection criteria which can be entered via the user interface (14).

4. Utility vehicle (1, 2) according to one of claims 1 to 3, **characterised in that** the user interface (14) is configured for manual input and adjustment of the distance (A) to be maintained to the boundary (20, 25).

5. Utility vehicle (1, 2) according to one of claims 1 to 4, **characterised in that** the camera arrangement (4) comprises at least one 2D camera (5a) or a 3D camera (5b) or a camera (5) that can be switched between a 2D mode and a 3D mode.

6. Utility vehicle (1, 2) according to claim 5, **characterised in that** the camera arrangement (4) is configured to generate colour information about the ground areas (18, 19) by means of the camera (5a, 5).

7. Utility vehicle (1, 2) according to claim 5, **characterised in that** the camera arrangement (4) is configured to generate 3D information about the ground areas (18, 19) by means of the camera (5b, 5).

8. Utility vehicle (1, 2) according to one of the preceding claims, **characterised in that** the control unit (8) is configured to determine the boundary (20, 25) by evaluating the colour information and/or the 3D information.

9. Utility vehicle (1, 2) according to one of the preceding claims, **characterised in that** the camera arrangement (4) is arranged in the front region of the utility vehicle (1, 2) or laterally on the utility vehicle (1, 2) on the side facing the ground area (19) to be processed.

10. Utility vehicle (1, 2) according to one of the preceding claims, **characterised in that** the viewing direction (7c) of the camera arrangement (4) is or can be aligned obliquely in front of and/or to the side of the utility vehicle (1, 2) with respect to the ground areas (18, 19).

11. Utility vehicle (1, 2) according to one of the preceding claims, **characterised in that** the camera arrangement (4) can be detachably fastened to the utility vehicle (1, 2) by means of a holding device (11).

12. Utility vehicle (1, 2) according to claim 11, **characterised in that** the orientation of the gaze (7c) of the camera arrangement (4) can be adjusted by controlling an actuator (12) on which the camera arrangement (4) or a holding device (11) receiving the camera arrangement (4) is arranged.

13. Utility vehicle (1, 2) according to one of the preceding claims, **characterised in that** the control unit (8) is configured to control the implement (3).

14. Method for automatically steering an Utility vehicle (1, 2), in particular an agricultural or municipal vehicle, according to one of the preceding claims with an implement, wherein the utility vehicle (1, 2) is autonomously guided by a steering system (17) with a control unit (8) for generating steering signals, wherein the steering system (17) comprises a camera arrangement (4) for recording images and a user interface (14) connected to the control unit (8), wherein the control unit (8) evaluates image data generated by the camera arrangement (4), in order to generate the steering signals as a function of the image data, the camera arrangement (4) being positioned on the Utility vehicle (1, 2) and aligned with its gaze (7c) in such a way that a ground area (18) to be travelled over and a ground area (19) to be worked on laterally adjacent thereto are detected simultaneously, wherein a boundary (20, 25) is determined by the control unit (8) on the basis of the detected image data, wherein the utility vehicle (1, 2) and/or the implement is guided along the boundary (20, 25) at a distance (A) to be maintained by the steering system (17).

## Revendications

1. Véhicule utilitaire (1, 2), en particulier véhicule utilitaire (1, 2) agricole ou communal, comprenant un outil de travail (3) conçu pour le traitement exclusif d'une zone du sol à traiter (19) qui s'étend parallèlement à une zone du sol à emprunter (18) par le véhicule utilitaire (1, 2), la zone du sol à emprunter (18) étant une surface pouvant être empruntée qui ne présente sensiblement pas de végétation, et la zone du sol à traiter (19) étant une surface présentant de la végétation devant être traitée au moyen de l'outil de travail (3), le véhicule utilitaire (1, 2) présentant un système de direction (17), le système de direction présentant une unité de commande (8) destinée à générer des signaux de direction en vue du guidage autonome du véhicule utilitaire (1, 2), un ensemble de caméra (4) destiné à prendre des images, ainsi qu'une interface utilisateur (14) reliée à l'unité de commande (8), l'unité de commande (8) étant conçue pour l'évaluation des données d'image produites par l'ensemble de caméra (4), afin de générer les signaux de direction en fonction des données d'image, l'ensemble de caméra (4), au nombre d'au moins un, étant positionné sur le véhicule utilitaire (1, 2) et étant orienté avec sa direction de visée (7c) de manière telle que la zone du sol à emprunter (18) et la zone du sol à traiter (19), adjacente à celle-ci sur le côté, puissent être détectées en même temps, et que l'unité de commande (8) est conçue pour déterminer, en fonction des données d'image recueillies, une limite (20, 25) le long de laquelle le système de direction (17) guide le véhicule utilitaire (1, 2) et/ou l'outil de travail (3) avec une distance (A) à respecter.

2. Véhicule utilitaire (1, 2) selon la revendication 1, **caractérisé en ce que** l'unité de commande (8) est conçue pour déterminer de manière automatique la limite (20, 25).

3. Véhicule utilitaire (1, 2) selon la revendication 1 ou 2, **caractérisé en ce que** l'unité de commande (8) est conçue pour déterminer la limite (20, 25) au moyen de critères de sélection prédéfinissables, qui peuvent être entrées à l'aide de l'interface utilisateur (14).

4. Véhicule utilitaire (1, 2) selon l'une des revendications 1 à 3, **caractérisé en ce que** l'interface utilisateur (14) est conçue pour la saisie et l'adaptation manuelles de la distance (A) devant être respectée par rapport à la limite (20, 25).

5. Véhicule utilitaire (1, 2) selon l'une des revendications 1 à 4, **caractérisé en ce que** l'ensemble de caméra (4) comprend au moins une caméra 2D (5a) ou une caméra 3D (5b) ou une caméra (5) pouvant être commutée entre un mode 2D et un mode 3D.

6. Véhicule utilitaire (1, 2) selon la revendication 5, **caractérisé en ce que** l'ensemble de caméra (4) est configuré pour générer à l'aide de la caméra (5a, 5) des informations de couleur sur les zones du sol (18, 19).

7. Véhicule utilitaire (1, 2) selon la revendication 5, **caractérisé en ce que** l'ensemble de caméra (4) est configuré pour générer à l'aide de la caméra (5a, 5) des informations 3D sur les zones du sol (18, 19).

8. Véhicule utilitaire (1, 2) selon l'une des revendications précédentes, **caractérisé en ce que** l'unité de commande (8) est conçue pour la détermination de la limite (20, 25), par évaluation des informations de couleur et/ou des informations 3D.

9. Véhicule utilitaire (1, 2) selon l'une des revendications précédentes, **caractérisé en ce que** l'ensemble de caméra (4) est disposé dans la région frontale du véhicule utilitaire (1, 2) ou sur le côté du véhicule utilitaire (1, 2), sur le côté tourné vers la zone du sol à traiter (19).

10. Véhicule utilitaire (1, 2) selon l'une des revendications précédentes, **caractérisé en ce que** la direction de visée (7c) de l'ensemble de caméra (7c) est orientée ou est amenée à être orientée sur les zones du sol (18, 19) situées en biais devant et/ou latéralement à côté du véhicule utilitaire (1, 2).

11. Véhicule utilitaire (1, 2) selon l'une des revendications précédentes, **caractérisé en ce que** l'ensemble de caméra (4) peut être fixé de manière amovible sur le véhicule utilitaire (1, 2) au moyen d'un dispositif de support (11).

12. Véhicule utilitaire (1, 2) selon la revendication 11, **caractérisé en ce que** l'orientation de la direction de visée (7c) de l'ensemble de caméra (7c) peut être réglée par activation d'un actionneur (12) sur lequel est disposé l'ensemble de caméra (4) ou un dispositif de support (11) accueillant l'ensemble de caméra (4).

13. Véhicule utilitaire (1, 2) selon l'une des revendications précédentes, **caractérisé en ce que** l'unité de commande (8) est conçue pour activer l'outil de travail (3).

14. Procédé de direction automatique d'un véhicule utilitaire (1, 2), en particulier agricole ou communal, selon l'une des revendications précédentes, comprenant un outil de travail, le véhicule utilitaire (1, 2) étant guidé de façon autonome par un système de direction (17) doté d'une unité de commande (8) destinée à générer des signaux de direction, le système de direction (17) comprenant un ensemble de caméra (4) destiné à la prise d'images, ainsi qu'une interface utilisateur (14) reliée à l'unité de commande (8), sachant que l'unité de commande (8) évalue des données d'image générées par l'ensemble de caméra (4), aux fins de générer les signaux de direction en fonction des données d'image, sachant que l'ensemble de caméra (4) est positionné sur le véhicule utilitaire (1, 2) et orienté avec sa direction de visée (7c) de manière à ce qu'une zone du sol à emprunter (18) et une zone du sol à traiter (19), adjacente à celle-ci sur le côté, soient détectées en même temps, l'unité de commande (8) déterminant une limite (20, 25) à l'aide des données d'image recueillies, le véhicule utilitaire (1, 2) et/ou l'outil de travail étant guidé(s) le long de la limite (20, 25) par le système de direction (17), à une distance (A) à respecter.
